# EUROPEAN PATENT SPECIFICATION

(11) **EP 0 891 923 B1**
(45) Date of publication and mention of the grant of the patent: **17.12.2003**
(21) Application number: 98110935.8
(22) Date of filing: 15.06.1998
(51) Int. Cl.: B62M 23/02

(54) **Input torque detection apparatus for motor-assist vehicle**
Drehmomentsensor für Fahrzeug mit Hilfsantrieb
Détecteur de couple pour un véhicule à assistance motorisée

(30) Priority: 14.07.1997 JP 18855697
(43) Date of publication of application: 20.01.1999
(73) Proprietor: HONDA GIKEN KOGYO KABUSHIKI KAISHA, Minato-ku Tokyo (JP)
(72) Inventor: Miura, Nobuo, 4-1, Chuo 1-chome, Wako-shi, Saitama (JP); Miura, Seishi, 4-1, Chuo 1-chome, Wako-shi, Saitama (JP)
(74) Representative: Liska, Horst, Dr.-Ing.

(56) References cited:
- DE-U- 29 608 085
- US-A- 4 356 732
- PATENT ABSTRACTS OF JAPAN vol. 1997, no. 03, 31 March 1997 (1997-03-31) & JP 08 313376 A (SHISURABO:KK;C S INTERNATL:KK; SUZUKI RYOICHI), 29 November 1996 (1996-11-29)

## Description

This invention relates to an input torque detection apparatus for a motor-assist vehicle, which includes an input operation member manually operated for driving a rear wheel to rotate and an electric motor capable of providing assisting power corresponding to an input torque provided to the input operation member to the driving wheel, for detecting an input torque applied to the input operation member.

DE-U-29608085 discloses an input torque detection apparatus according to the preamble of claim 1.

Conventionally, an input torque detection apparatus for detecting an input torque of a motor-assist bicycle is known already by the official gazette of, for example, Japanese Patent Laid-Open Application No. Heisei 8313376 and so forth.

However, the conventional apparatus described above is constructed such that rotation of a crank pedal is detected by a first rotation sensor while rotation of a pedal sprocket wheel is detected by a second rotation sensor, and a phase difference based on a time difference between rotation pulses which are detection signals of the two rotation sensors is recognized as an input torque. Consequently, unless pulse signals are outputted from the two rotation sensors, the time difference cannot be detected, and accordingly, in a condition of the vehicle speed = 0 wherein the pedal sprocket wheel is not rotating, it is impossible to detect an input torque and power assistance by an electric motor cannot be performed upon starting of treadling of the crank pedal from a stopping condition of the vehicle.

The present invention has been made in view of such a situation as described above, and it is an object of the present invention to provide an input torque detection apparatus for a motor-assist vehicle which allows detection of an input torque in order to apply assisting power to a driving wheel rapidly upon starting of operation inputting from a stopping condition of the vehicle.

In order to attain the object described above, according to the invention as set forth in claim 1, there is provided an input torque detection apparatus for a motor-assist vehicle, which vehicle includes an input operation member manually operated for driving a rear wheel to rotate and an electric motor capable of providing assisting power corresponding to an input torque provided to the input operation member to the driving wheel wherein the apparatus comprises a first rotary member adapted to rotate in synchronism with the rotation of the input operation member, a second rotary member adapted to rotate in synchronism with the rotation of the driving wheel while allowing a phase difference in the direction of rotation from the first rotary member to be produced, a first magnetic ring which has a plurality of N poles and S poles arranged in a ring-like configuration and having different polarities adjacent each other in a circumferential direction and rotates together with the first rotary member, a second magnetic ring which has a plurality of N poles and S poles arranged in a ring-like configuration with an equal angle to that of the N poles and S poles of the first magnetic ring and rotates together with the second rotary member, a plurality of first sensors arranged at fixed positions in an opposing relationship to the first magnetic ring for detecting the N poles and S poles of the first magnetic ring, a plurality of second sensors arranged at fixed positions in an opposing relationship to the second magnetic ring for detecting the N poles and S poles of the second magnetic ring, and a control unit for discriminating a rotational phase difference between the first and second rotary members based on a combination pattern of detection signals of the first and second sensors and recognizing the rotational phase difference as an information representing said input torque applied to the input operation member to control operation of the electric motor.

With such a construction as described above, since, even in a condition wherein the driving wheel is not rotating in an initial stage of operation of the input operation member, the first rotary member provides a rotational phase difference from the second rotary member and also the first magnetic ring provides a rotational phase difference from the second magnetic ring, the combination pattern of the detection signals of the plurality of first sensors and the plurality of second sensors varies comparing with that prior to the operation of the input operation member, and in an initial stage of starting of the inputting operation in a stopping condition of the vehicle, the input torque can be detected and assisting power by the electric motor can be provided to the driving wheel immediately.

Meanwhile, according to the invention as set forth in claim 2, the input torque detection apparatus for a motor-assist vehicle is constructed, in addition to the construction of the invention as set forth in claim 1 described above, such that the first rotary member is connectable the input operation member through a one-way clutch which interrupts torque transmission from the first rotary member side to the input operation member side, and the second rotary member between which and the f irst rotary member a coil spring is interposed is arranged at a position adjacent the first rotary member in such a manner as to allow rotation thereof around a same axis as that of the first rotary member while the first and second magnetic rings juxtaposed in the axial direction of the first and second rotary members are arranged on one side in the axial direction of the first and second rotary members . Consequently, not only a space in which the first and second sensors should be arranged is assured on one side of the first and second rotary members, thereby eliminating the necessity to assure a surplus space for arrangement of the two sensors, but also the first and second magnetic rings and the first and second sensors can be mounted collectively on one side of the two rotary members, thereby facilitating the mounting operation for them. The space for arrangement of the two sensors is reduced to the utmost.

According to the invention as set forth in claim 3, the input torque detection apparatus for a motor-assist vehicle is constructed, in addition to the construction of the invention as set forth in claim 2 described above, such that the first and second magnetic rings are resiliently engaged with the first and second rotary members, respectively. Consequently, maintenance and mounting operations of the first and second magnetic rings are facilitated.

According to the invention as set forth in claim 4, the input torque detection apparatus for a motor-assist vehicle is constructed, in addition to the construction of the invention as set forth in claim 2 or 3 described above, such that the first and second magnetic rings have a plurality of N poles and S poles provided on inner peripheries of ring-shaped first and second housings respectively, and the first and second sensors are arranged on the inner sides of both of the magnetic rings, respectively. Consequently, since the two sensors are arranged inwardly of the first and second magnetic rings which have a cylindrical configuration, further reduction of the space can be achieved, and the two sensors can be covered with the two housings to protect them.

According to the invention as set forth in claim 5, the input torque detection apparatus for a motor-assist vehicle is constructed, in addition to the construction of the invention as set forth in claim 2 described above, such that the first and second magnetic rings and first and second sensors are covered with a protective cover from the opposite side to the first and second rotary members. Consequently, pollution to the two sensors and the two magnetic rings by water, mud or the like can be prevented.

In the following, an embodiment of the present invention is described in connection with working examples of the present invention shown in the accompanying drawings.
FIG. 1 is a side elevational view of a motor-assist bicycle of a first working example.
FIG. 2 is an enlarged view of essential part of FIG. 1.
FIG. 3 is a sectional view taken along line 3-3 of FIG. 2.
FIG. 4 is an enlarged view of essential part of FIG. 3.
FIG. 5 is a sectional view taken along line 5-5 of FIG.4.
FIG. 6 is a sectional view taken along line 6-6 of FIG. 4.
FIG. 7 is an enlarged sectional view taken along line 7-7 of FIG. 2.
FIG. 8 is a sectional view taken along line 8-8 of FIG. 4.
FIG. 9 is a sectional view taken along line 9-9 of FIG.4.
FIG. 10 is a view showing a relative arrangement of first sensors and magnetic poles of a first magnetic ring.
FIG. 11 is a view for explaining a detection pattern of the first sensors with respect to a variation of the relative position with the first magnetic ring in a circumferential direction.
FIG. 12 is a flow chart illustrating a control procedure of an electric motor of a control unit.
FIG. 13 is a view for explaining detection patterns of the first and second sensors with respect to relative rotation of the first and second magnetic rings.
FIG. 14 is a view for explaining phase difference detection in an ordinary travelling condition.
FIG. 15 is a sectional view of a second working example corresponding to FIGS. 8 and 9.

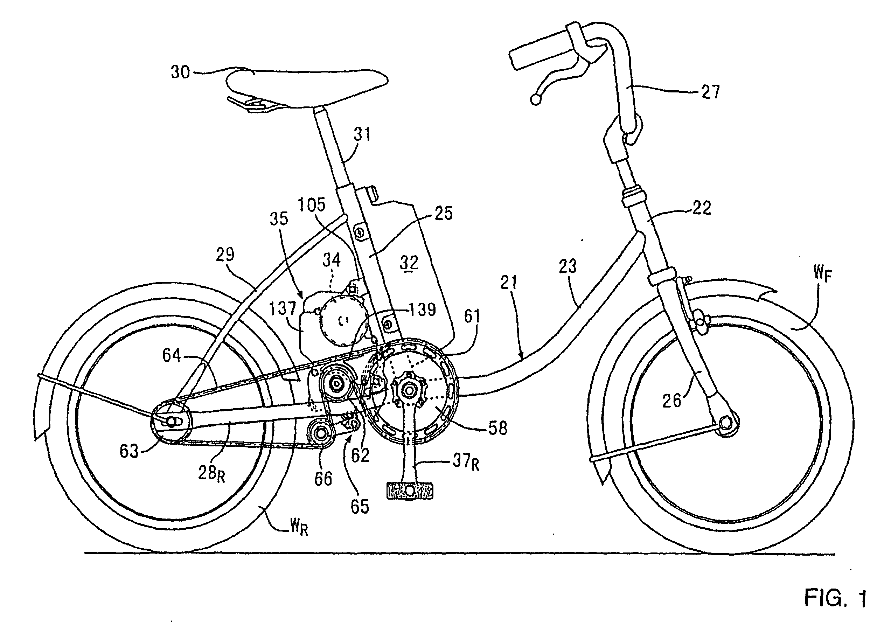

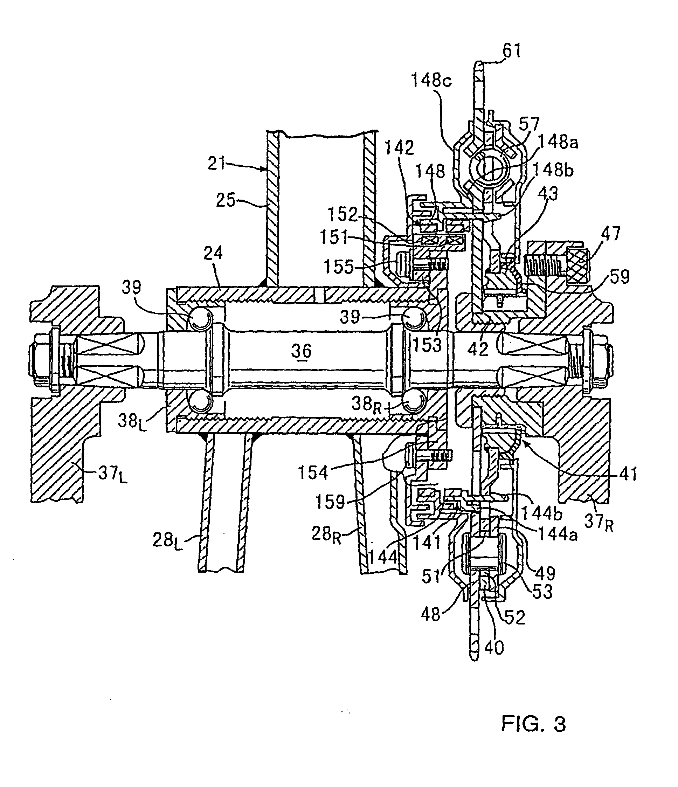

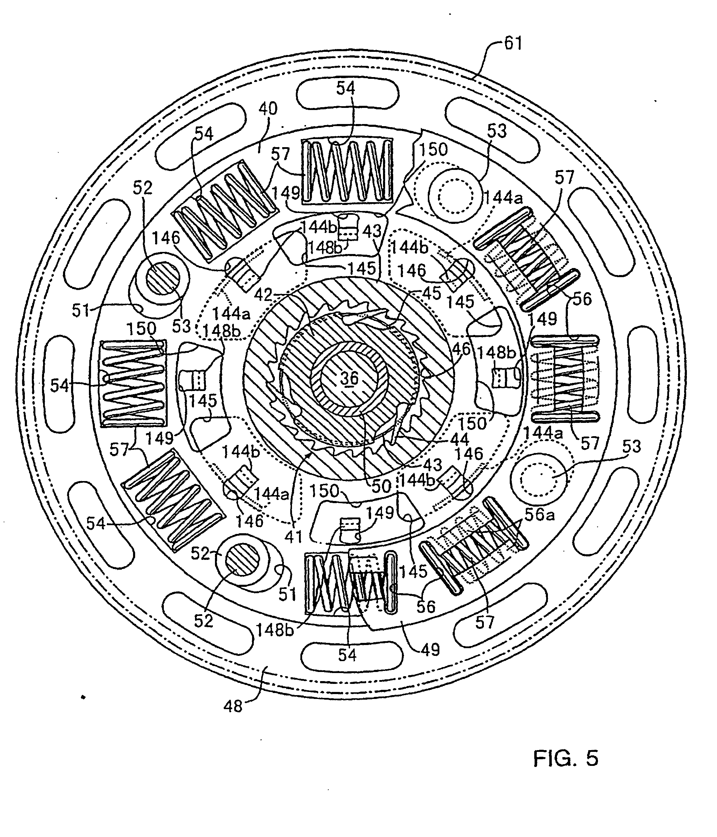

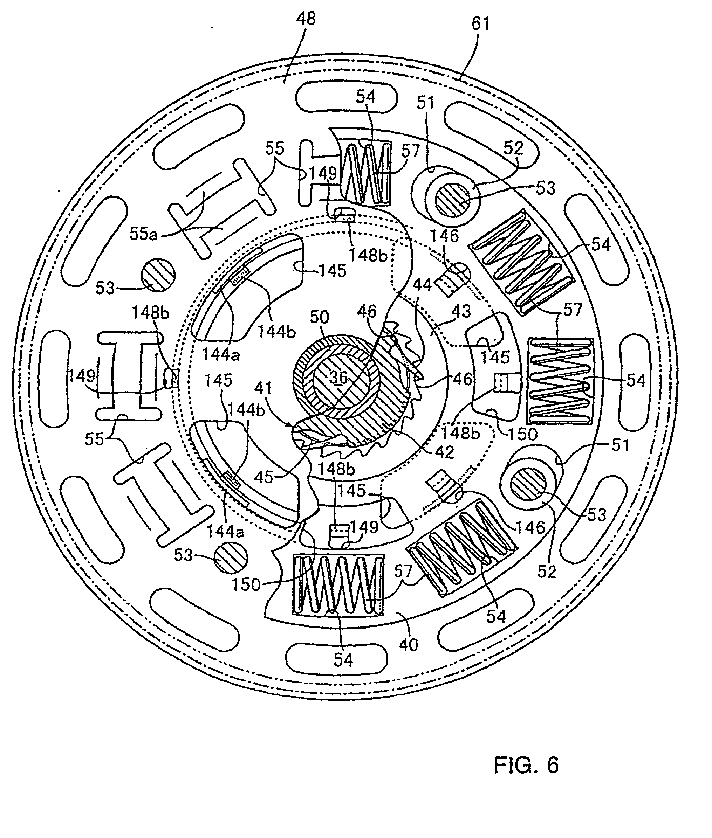

FIGS. 1 to 14 show a first working example when the present invention is applied to a motor-assist bicycle.

Referring first to FIGS. 1 to 3, the present motor-assist bicycle includes a body frame 21 having a substantially U-shape which is open upwardly in side elevation, and the body frame 21 includes a head pipe 22 provided at a front end thereof, a main frame 23 extending rearwardly downwards from the head pipe 22, a support pipe 24 securely mounted at a rear end of the main frame 23 and extending leftwardly and rightwardly, and a seat post 25 extending upwardly from the support pipe 24.

A front fork 26 is supported for steering operation on the head pipe 22, and a front wheel W_{F} is supported for rotation at a lower end of the front fork 26 while a steering handle bar 27 is provided at an upper end of the front fork 26. Meanwhile, a rear wheel W_{R} serving as a driving wheel is supported for rotation between rear ends of a pair of left and right rear forks 28_{L,} 28_{R} which extend to the rear side from the support pipe 24 at the rear portion of the body frame 21, and a pair of left and right stays 29 ... are provided between an upper portion of the seat post 25 and the two rear forks 28_{L}, 28_{R}.

A support shaft 31 having a seat 30 provided at an upper end thereof is mounted on the seat post 25 such that the vertical position of the seat 30 can be adjusted, and a battery accommodating box 32 for removably accommodating a battery not shown therein is provided at a front portion of the seat post 25 below the seat 30.

On the rear side of the battery accommodating box 32, a power unit 35 having an electric motor 34 to which power is supplied from the battery accommodated in the battery accommodating box 32 is arranged, and the power unit 35 is supported on the seat post 25 and the right-hand side rear fork 28_{R}.

A pair of crank pedals 37_{L}, 37_{R} each serving as an input operation member are securely connected to the left end and the right end of a crankshaft 36 which coaxially extends through the support pipe 24 of the body frame 21, and a pair of ball bearings 39, 39 are provided between the crankshaft 36 and a pair of lid plates 38_{L}, 38_{R} through which the crankshaft 36 extends for rotation and which close up the left end and the right end of the support pipe 24, respectively. In other words, the crankshaft 36 is supported for rotation on the body frame 21.

Treadling force by the crank pedals 37_{L}, 37_{R} at the opposite left and right ends of the crankshaft 36 is transmitted in synchronism with rotation of the crank pedals 37_{L}, 37_{R} to a first rotary disk 40 serving as a first rotation member, and a first one-way clutch 41 for interrupting torque transmission from the first rotary disk 40 to the right-hand side crank pedal 37_{R} is provided between the crank pedal 37_{R} and the first rotary disk 40.

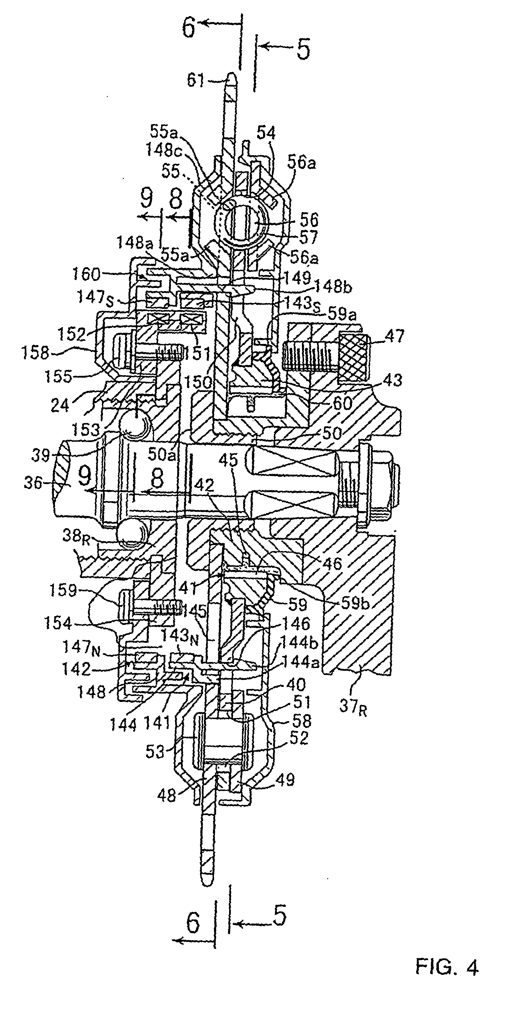

Referring also to FIGS. 4 to 6, the first one-way clutch 41 includes a clutch inner race 42 securely mounted at a base end portion of the right-hand side crank pedal 37_{R} by a plurality of bolts 47 and coaxially surrounding the crankshaft 36, a clutch outer race 43 coaxially surrounding the clutch inner race 42, and a plurality of, for example, three, ratchet pawls 44 ... supported for pivotal motion on an outer periphery of the clutch inner race 42 and each biased in an expanding direction by an annular spring 45, and ratchet teeth 46 for engaging the ratchet pawls 44 ... are formed on an inner periphery of the clutch outer race 43 while an inner periphery of the first rotary disk 40 is securely mounted on an outer periphery of the clutch outer race 43 by soldering or the like.

With the first one-way clutch 41 having such a construction as described above, if the crank pedals 37_{L}, 37_{R} are treadled to rotate the crankshaft 36 forwardly, then the treadling force of the crank pedals 37_{L}, 37_{R} is transmitted to the first rotary disk 40. However, if the crank pedals 37_{L}, 37_{R} are treadled to rotate the crankshaft 36 reversely, then the first one-way clutch 41 slips to allow reverse rotation of the crankshaft 36 and no torque is transmitted from the first rotary disk 40 to the crank pedal 37_{R} side.

At a position on the inner side adjacent the first rotary disk 40 along the axis of the crankshaft 36, a second rotary disk 48 serving as a second rotation member which is formed with a larger diameter than the first rotary disk 40 is arranged such that it coaxially surrounds the crankshaft 36, and an inner peripheral portion of the second rotary disk 48 is held for relative rotation between the clutch inner race 42 of the first one-way clutch 41 and a flange portion 50a provided on a cylindrical support member 50 while the support member 50 surrounds the crankshaft 36 for relative rotation and is coupled to the inner periphery of the clutch inner race 42, for example, by screw coupling. Meanwhile, a ring-shaped holding plate 49 is disposed on the outer side of the first rotary disk 40 along the axial line of the crankshaft 36 such that the outer peripheral portion of the first rotary disk 40 is held between the holding plate 49 and the second rotary disk 48.

At a plurality of locations, for example, at four locations, spaced equally from each other along a circumferential direction at a portion near to the outer periphery of the first rotary disk 40, guide holes 51, 51 ... which extend arcuately along an imaginary circle centered at the axis of the crankshaft 36 are provided, and cylindrical collars 52, 52 ... individually fitted in the guide holes 51, 51 ... are arranged between the second rotary disk 48 and the holding plate 49 while the second rotary disk 48 and the holding plate 49 are connected to each other by rivets 53, 53 ... which individually extend through the collars 52, 52 .... Accordingly, the second rotary disk 48 and the holding plate 49 can make relative rotation to the first rotary disk 40 within a range which they can move in the guide holes 51, 51 ... . Further, a rustproof film (not shown) for preventing rust is adhered to each of opposing faces of the first rotary disk 40 and the second rotary disk 48 and holding plate 49.

A plurality of accommodating holes 54, 54 ... extending comparatively long in a circumferential direction are provided in the first rotary disk 40 such that two such accommodating holes 54, 54 are arranged between each adjacent ones of the guide holes 51, 51 ..., and also the second rotary disk 48 and the holding plate 49 have provided therein control holes 55, 55 ..., 56, 56 ... which correspond to the accommodating holes 54, 54 ... of the first rotary disk 40, respectively. Coil springs 57, 57 ... serving as resilient members are accommodated in the accommodating holes 54, 54 ... and the control holes 55, 55 ..., 56, 56 ..., and when the first rotary disk 40 and the second rotary disk 48 and holding plate 49 do not make relative rotation, the opposite ends of the coil springs 57, 57 ... remain in contact with the opposite ends of the accommodating holes 54, 54 ... and the control holes 55, 55 ..., 56, 56 ... . However, if the first rotary disk 40 makes relative rotation to the second rotary disk 48 and the holding plate 49, then while one end of each of the coil springs 57, 57... remains in contact with one end of a corresponding one of the accommodating holes 54, 54 ..., the other end is pushed by the other end of a corresponding one of the control holes 55, 55 ..., 56, 56 ... so that it is spaced from the other end of the corresponding one of the accommodating holes 54, 54 .... In other words, the first rotary disk 40 makes relative rotation to the second rotary disk 48 and the holding plate 49 while compressing each of the coil springs 57, 57 ... .

In order to keep the accommodated condition of the coil springs 57, 57 ... in the accommodating holes 54, 54 ... and the control holes 55, 55 ..., 56, 56 ..., the second rotary disk 48 has wall portions 55a, 55a ... provided thereon which extend obliquely substantially along outer peripheries of the coil springs 57, 57 ... from the opposite side edges of the control holes 55, 55, ..., and the holding plate 49 has holding wall portions 56a, 56a ... provided thereon which extend obliquely substantially along the outer peripheries of the coil springs 57, 57 ... from the opposite side edges of the control holes 56, 56 ... .

The first rotary disk 40 and the holding plate 49 are covered with a cover 58 mounted on an outer periphery of the first rotary disk 40, and a lip portion 59a provided on the outer periphery side of an annular resilient seal member 59 mounted on the clutch outer race 43 of the first one-way clutch 41 is resiliently held in contact with an inner face of an inner peripheral portion of the cover 58 while another lip portion 59b provided on an inner periphery side of the resilient seal member 59 is resiliently held in contact with the clutch inner race 42. Further, grease 60 is filled between the clutch inner race 42 and the clutch outer race 43 of the first one-way clutch 41 in such a manner that it is enclosed by the lip portion 59b.

A pedal sprocket wheel 61 is provided on an outer periphery of the second rotary disk 48 which projects outwardly sidewardly from the cover 58, and an endless chain 64 extends between and around the pedal sprocket wheel 61, a driving sprocket wheel 62 driven by the power unit 35 and a driven sprocket wheel 63 provided on an axle of the rear wheel W_{R} while a sprocket wheel 66 provided on a tensioner 65 for applying tension to the chain 64 is meshed with the chain 64 between the driving sprocket wheel 62 and the driven sprocket wheel 63.

Accordingly, the treadling force of the crank pedals 37_{L}, 37_{R} transmitted to the first rotary disk 40 through the first one-way clutch 41 is transmitted to the second rotary disk 48, that is, to the pedal sprocket wheel 61 while compressing the coil springs 57, 57 ..., and is further transmitted to the rear wheel W_{R} through the endless chain 64 and the driven sprocket wheel 63. Meanwhile, assisting power applied from the power unit 35 to the driving sprocket wheel 62 is transmitted to the rear wheel W_{R} through the chain 64 and the driven sprocket wheel 63, but torque by the assisting power from the power unit 35 is not transmitted to the crank pedals 37_{L}, 37_{R} side due to an action of the first one-way clutch 41.

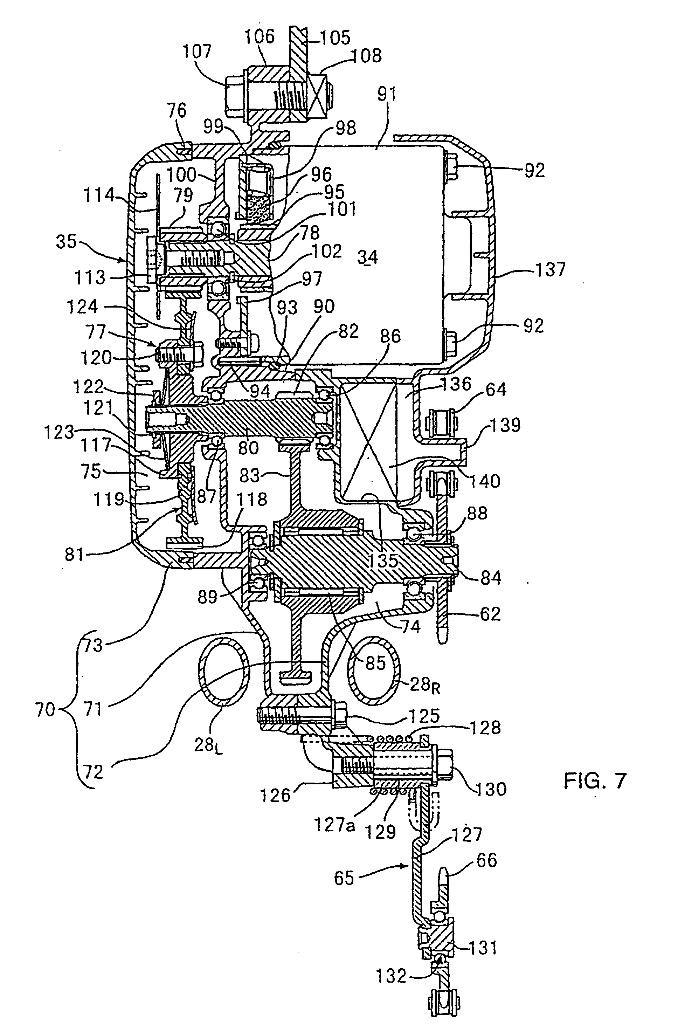

Referring to FIG. 7, a casing 70 of the power unit 35 includes a left casing half 71, a right casing half 72 coupled to the left casing half 71 such that it cooperates with the left casing half 71 to form a first accommodation chamber 74 therebetween, and a cover 73 coupled to the left casing half 71 such that it cooperates with the left casing half 71 to form a second accommodation chamber 75 therebetween, and a gasket 76 made of rubber is mounted on a coupling face of the cover 73 to the left casing half 71.

The electric motor 34 having an axis of rotation parallel to the axis of rotation of the crankshaft 36 is mounted on the casing 70, and output power of the electric motor 34 is transmitted to the driving sprocket wheel 62 through a reduction gear train 77 in order to assist the treadling force by the crank pedals 37_{L}, 37_{R}.

The reduction gear train 77 for transmitting power of the electric motor 34 to the driving sprocket wheel 62 includes a driving gear 79 securely mounted on a motor shaft 78 of the electric motor 34 in the second accommodation chamber 75, a first intermediate gear 81 securely mounted on one end of an idle shaft 80 in the second accommodation chamber 75 and held in meshing engagement with the driving gear 79, a second intermediate gear 82 provided integrally with the idle shaft 80 in the first accommodation chamber 74, a driven gear 83 held in meshing engagement with the second intermediate gear 82, a rotary shaft 84 arranged coaxially with the driven gear 83, and a second one-way clutch 85 provided between the driven gear 83 and the rotary shaft 84, and the driving sprocket wheel 62 is secured to an end portion of the rotary shaft 84 which projects from the right casing half 72.

The idle shaft 80 has an axis parallel to the motor shaft 78 of the electric motor 34, and a ball bearing 86 is interposed between the right casing half 72 and the idle shaft 80 while another ball bearing 87 is interposed between the left casing half 71 and the idle shaft 80. The rotary shaft 84 has an axis parallel to the idle shaft 80, and a ball bearing 88 is interposed between the right casing half 72 and the rotary shaft 84 while another ball bearing 89 is interposed between the left casing half 71 and the rotary shaft 84.

In the reduction gear train 77 having such a construction as described above, torque produced upon operation of the electric motor 34 is transmitted in a reduced speed to the driving sprocket wheel 62, but when the operation of the electric motor 34 stops, idle rotation of the rotary shaft 84 is allowed because of an action of the second one-way clutch 85, and rotation of the driving sprocket wheel 62 by the treadling force of the crank pedals 37_{L}, 37_{R} is not disturbed.

A fitting tubular portion 90 which projects to the side opposite to the cover 73 is provided integrally on the left casing half 71 of the casing 70, and a bottomed cylindrical motor housing 91 provided on the electric motor 34 is fastened to the left casing half 71 by a plurality of, for example, two, bolts 92, 92 in a condition wherein it is fitted with the fitting tubular portion 90. Besides, a positioning pin 93 implanted on the left casing half 71 is engaged with an opening of the motor housing 91 so that the motor housing 91 is positioned around the axis in the fitting tubular portion 90. Further, stepped portions for holding an annular seal member 94 therebetween are formed in a corresponding relationship to each other on an outer face near to the opening end of the motor housing 91 and an inner face of the fitting tubular portion 90, and the seal member 94 is held between the motor housing 91 and the fitting tubular portion 90 by fitting and securing the motor housing 91 in the fitting tubular portion 90.

The electric motor 34 has the motor shaft 78 having an axis parallel to the crankshaft 36, and a plurality of brushes 96 ... are held in sliding contact with a commutator 95 provided on the motor shaft 78. Further, a support wall portion 100 which opposes the opening of the motor housing 91 is provided integrally on the left casing half 71 such that it closes up an inner end of the fitting tubular portion 90, and the brushes 96 ... are held between a support plate 9·7 made of a nonconducting material and fastened to the support wall portion 100 and holders 98 ... mounted on the support plate 97 while the brushes 96 ... are biased in a direction to slidably engage with the commutator 95 by springs 99 ... received between the holders 98 ... and the brushes 96 ... .

The motor shaft 78 extends for rotation through the support wall portion 100 and projects to the second accommodation chamber 75 side, and a ball bearing 101 is provided between the support wall portion 100 and the motor shaft 78 such that it is force fitted in the support wall portion 100 and a snap ring 102 for preventing an inner race of the ball bearing 101 from moving to the commutator 95 side is mounted on the motor shaft 78.

By the way, the casing 70 is supported on the seat post 25 of the body frame 21 and the right-hand side rear fork 28_{R} such that the electric motor 34 is arranged at an upper location on the rear side with respect to the crankshaft 36, and a hanger portion 106 provided integrally-at an upper portion of the left casing half 71 such that it swells upwardly is fastened to a bracket 105 securely mounted on the seat post 25 by a bolt 107 and a nut 108 while another hanger portion 110 provided integrally on the left, right casing halves 71, 72 such that it extends forwardly is fastened to a bracket 109 securely mounted on the right-hand side rear fork 28_{R} by a bolt 111 and a nut 112.

The driving gear 79 is spline fitted at an end portion of the motor shaft 78 which projects into the second accommodation chamber 75, and a bolt 113 coaxial with the motor shaft 78 is screwed into the end portion of the motor shaft 78 such that it cooperates with the inner race of the ball bearing 101 to hold the driving gear 79 and a reluctor 114 therebetween so that movement of the driving gear 79 along the axis of the motor shaft 78 is stopped and the driving gear 79 is secured to the motor shaft 78.

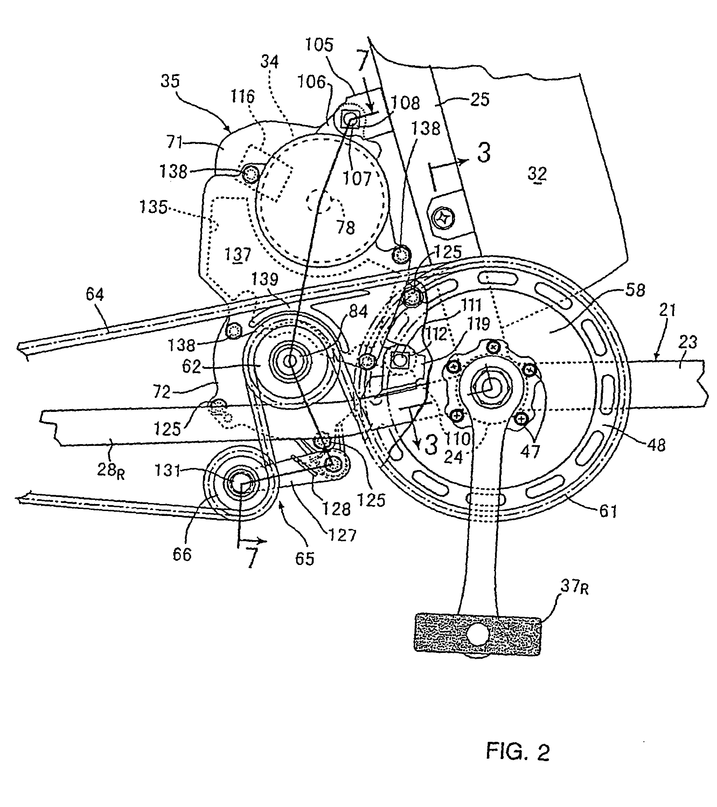

A rotational speed sensor 116 of the electromagnetic pickup coil type for cooperating with the reluctor 114 to detect the speed of rotation of the motor shaft 78 is secured to the left casing half 71 of the casing 70 such that it is arranged in an opposing relationship to the reluctor 114 in the second accommodation chamber 75 as shown in FIG. 2.

The first intermediate gear 81 which meshes with the driving gear 79 is formed, at an outer peripheral portion, that is, a portion at which it meshes with the driving gear 79, from a synthetic resin, and a ring member 119 formed in a ring-shape from a synthetic resin and having a teethed portion 118 on an outer periphery thereof is fastened to a boss 117 made of a metal and coupled to the idle shaft 80 by means of a plurality of bolts 120 ... .

The boss 117 is spline fitted with the idle shaft 80 such that it contacts at one end thereof with the inner race of the ball bearing 87 supported on the idle shaft 80. Meanwhile, a snap ring 121 is mounted on an outer face of an end portion of the idle shaft 80, and a receiving member 122 is mounted on the idle shaft 80 such that its movement in a direction away from the boss 117 is prevented by the snap ring 121 while a disk spring 123 is provided between the other end of the boss 117 and the receiving member 122 . By a spring force exerted by the disk spring 123, the first intermediate gear 81 is pressed toward the inner race side of the ball bearing 87 so that the first intermediate gear 81 is fixed to the idle shaft 80. Meanwhile, a reinforcing plate 124 made of a metal is held in contact with the ring member 119, and the reinforcing plate 124 is fastened together with the ring member 119 by the bolts 120 ... .

The rotary shaft 84 is supported for rotation on the casing 70 such that a lower portion of the driven gear 83 mounted on the rotary shaft 84 with the second one-way clutch 85 interposed therebetween is arranged between the left, right rear forks 28_{L}, 28_{R}, and lower portions of the left, right casing halves 71, 72 fastened to each other by a plurality of bolts 125 ... are formed such that they extend downwardly between the two rear forks 28_{L}, 28_{R} in such a manner that they cover over a lower portion of the driven gear 83. Since the lower portions of the left, right casing halves 71, 72, that is, the lower portions of the casing 70, are arranged lower than the two rear forks 28_{L}, 28_{R} in this manner, the center of gravity of the power unit 35 is arranged at a lower location to the utmost, which can contribute to arrangement of the center of gravity to a lower location of the motor-assist bicycle.

An arm portion 126 is provided integrally at a lower end of the left casing half 71, and the tensioner 65 for tensioning the chain 64 is mounted on the arm portion 126. The tensioner 65 includes a lever 127 supported at a base end portion thereof on the arm portion 126 for rocking motion around an axis parallel to the rotary shaft 84, the sprocket wheel 66 supported for rotation at an end of the lever 127, and a spring 128 for biasing the lever 127 in a direction to tension the chain 64 meshing with the sprocket wheel 66.

The lever 127 has a cylindrical portion 127a provided at a base end portion thereof, and a cylindrical support shaft 129 inserted in the cylindrical portion 127a is fastened to the arm portion 126 by a bolt 130 such that it has an axis parallel to the rotary shaft 84. The spring 128 is a torsion spring which surrounds the cylindrical portion 127a, and the opposite ends of the spring 128 are engaged with the arm portion 126 and the lever 127.

A shaft 131 having an axis parallel to the support shaft 129 is securely mounted at an end portion of the lever 127, and the sprocket wheel 66 is mounted at an end portion of the lever 127 such that a ball bearing 132 is interposed between the sprocket wheel 66 and the shaft 131.

A recessed portion 135 is provided on the outer face side of the left casing half 71 between the rotary shaft 84 and the electric motor 34, and a cover 137 which covers over the recessed portion 135 and part of the electric motor 34 is fastened to the left casing half 71 by a plurality of bolts 138 ... and a control unit 140 is accommodated in an accommodation chamber 136 formed by the cover 137 and the recessed portion 135.

Operation of the electric motor 34 is controlled by the control unit 140, and the control unit 140 controls operation of the electric motor 34 based on a speed of rotation of the electric motor 34 detected by the rotational speed sensor 116 and an input torque from the crank pedals 37_{L,} 37_{R}.

Provided integrally in a projecting condition on an outer face of the cover 137 is a guide projection 139 which guides circulation of the chain 64 such that a portion of the chain 64 wound on the driving sprocket wheel 62 and another portion of the chain 64 which extends from the driven sprocket wheel 63 to the pedal sprocket wheel 61 may be prevented from contacting with each other.

Referring back to FIG. 4, a first magnetic ring 141 which rotates together with the first rotary disk 40 is arranged on the side opposite to the first rotary disk 40 with respect to the second rotary disk 48, and a second magnetic ring 142 which rotates together with the second rotary disk 48 is arranged at a position at which it cooperates with the first magnetic ring 141 to hold the second rotary disk 48 therebetween. In particular, the first and second magnetic rings 141, 142 are arranged in a juxtaposed relationship in an axial direction on one side of the axial direction of the first and second rotary disks 40, 48.

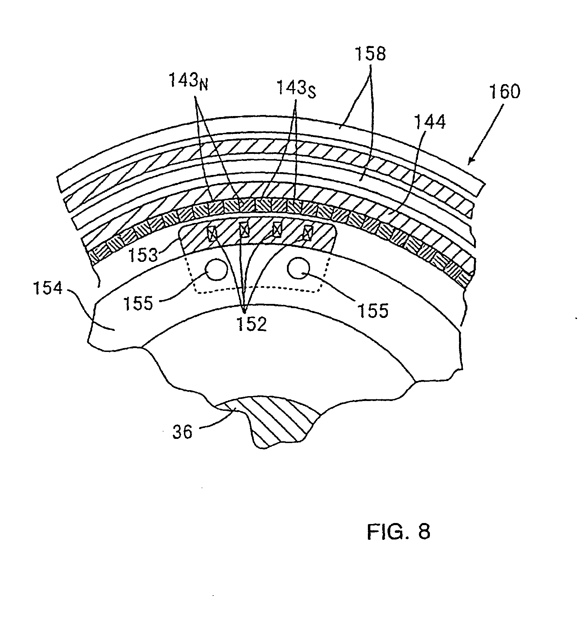

Referring also to FIG. 8, the first magnetic ring 141 is constructed such that a plurality of N poles 143_{N} ... and a plurality of S poles 143_{S} ... arranged in a ring-shaped configuration such that each two adjacent ones of them in a circumferential direction have different polarities from each other are provided on an inner periphery of a cylindrical first housing 144 which is made of a non-magnetic material such as a synthetic resin, and, for example, 60 such N poles 143_{N} ... and 60 such S poles 143_{S} ... are provided on the inner periphery of the first housing 144 such that each of them has a central angle of, for example, 3 degrees.

By the way, insertion holes 145 ... are provided at a plurality of, for example, four, locations in a circumerential direction of the second rotary disk 48 adjacent the first magnetic ring 141, and engaging holes 146 ... corresponding to the insertion holes 145 ... are provided on the first rotary disk 40. Meanwhile, contacting leg portions 144a ... which extend through the insertion holes 145 ... and contact with the first rotary disk 40 and engaging pawl portions 144b ... which extend through the insertion holes 145 ... and resiliently engage with the engaging holes 146 ... are provided integrally on the first housing 144 of the first magnetic ring 141, and the first magnetic ring 141 is resiliently engaged with the first rotary disk 40. Thus, since the first and second rotary disks 40, 48 rotate relative to each other, the insertion holes 145 ... are formed comparatively long along a circumferential direction of the second rotary disk 48 so that, also when the first and second rotary disks 40, 48 rotate relative to each other, the contacting leg portions 144a ... and the engaging pawl portions 144b ... may not contact with the opposite sides of the insertion holes 145 ... in the circumferential direction.

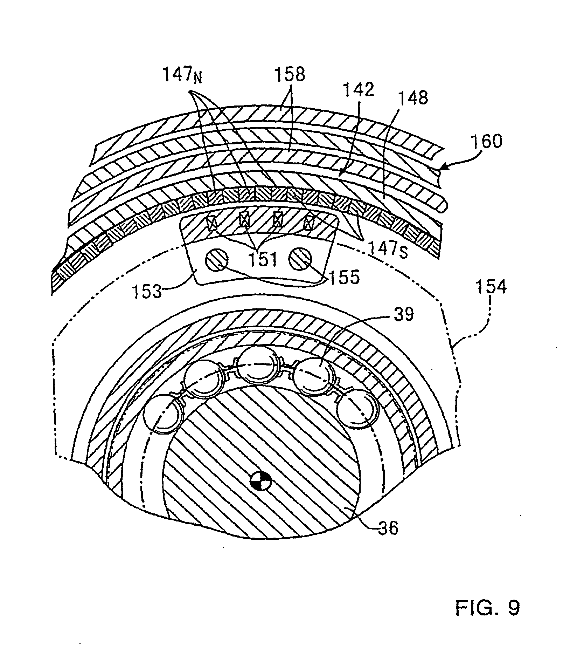

Referring also to FIG. 9, the second magnetic ring 142 is constructed such that a plurality of N poles 147_{N} ... and a plurality of S poles 147_{S} arranged in a ring-shaped configuration such that each adjacent ones of them in a circumferential direction may have different polarities from each other are provided on an inner periphery of a cylindrical second housing 148 made of a non-magnetic material such as a synthetic resin, and the N poles 147_{N} ... and the S poles 147_{S} are provided on the inner periphery of the second housing 148 such that they have an equal angle to that of the N poles 143_{N} ... and the S poles 143_{S} ... of the first magnetic ring 141.

Engaging holes 149 ... are provided at a plurality of locations, for example, at four locations, in a circumferential direction of the second rotary disk 48, and a plurality of, for example, four, contacting leg portions 148a ... which contact with the second rotary disk 48 and engaging pawl portions 148b ... which resiliently engage with the engaging holes 149 ... are provided integrally on the second housing 148 of the second magnetic ring 142 and the second magnetic ring 142 is resiliently engaged with the second rotary disk 48. Further, since openings 150 ... in which the engaging pawl portions 148b ... engaged with the engaging holes 149 ... are arranged are provided on the first rotary disk 40 and the first and second rotary disks 40, 48 rotate relative to each other, the openings 150 ... are formed comparatively long along a circumferential direction of the first rotary disk 40 so that, also when the first and second rotary disks 40, 48 rotate relative to each other, the pawl portions 148b ... are not contacted with the opposite sides of the openings 150 ... in the circumferential direction.

Further, a cover portion 148c extending outwardly in a radial direction from the entire periphery at positions at which the contacting leg portions 148a are provided is provided integrally on the second housing 148 of the second magnetic ring 142, and portions corresponding to the control holes 55 ... of the second rotary disk 48 on the opposite side to the first rotary disk 40 are covered with the cover portion 148c.

Inwardly of the first magnetic ring 141, for example, four first sensors 151 ... for detecting the N poles 143_{N} ... and the S poles 143_{S} provided on the inner periphery of the first magnetic ring 141 are arranged in an equally spaced relationship from each other in the circumferential direction, and inwardly of the second magnetic ring 142, for example, four second sensors 152 ... for detecting the N poles 147_{N} ... and the S poles 147_{S} ... provided on the inner periphery of the second magnetic ring 142 are arranged in an equally spaced relationship from each other in the circumferential direction. The first and second sensors 151..., 152 ... are required only that they can detect a magnetic pole, and, for example, a Hall effect element or an MR element is used preferably.

The first sensors 151 ... and the second sensors 152 ... are embedded in a base member 153 made of a synthetic resin or the like, and the base member 153 is fastened to a support ring 154 held between the lid plate 38_{R} screwed to the right end of the support pipe 24 of the body frame 21 and the right end of the support pipe 24 by a plurality of, for example, two, screw members 155, 155.

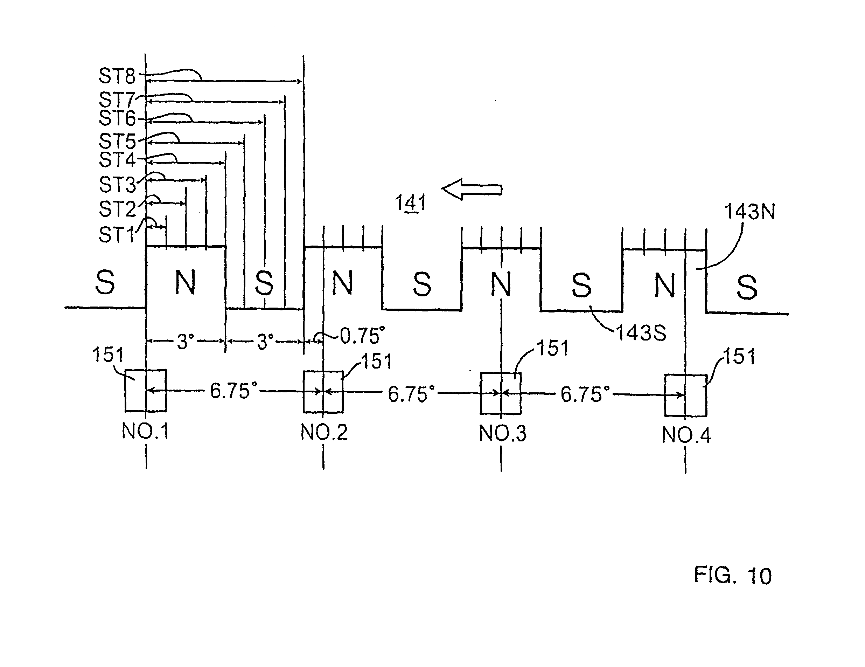

Referring to FIG. 10, the four first sensors 151 ... are embedded in the base member 153 in a spaced relationship from each other by 6.75 degrees while each of the N poles 143_{N} ... and the S poles 143_{S} has an angle of 3 degrees, and according to such an arrangement of the N poles 143_{N} ... and S poles 143_{S} ... and the first sensors 151 ... as just described, when the first magnetic ring 141 is angularly displaced in a direction indicated by an arrow mark in FIG. 10 with respect to the fixed first sensors 151 ..., the combination pattern of detection signals of the four first sensors 151 ... is different for different stages, ST1 to ST8 from the first stage ST13 to the eighth stage ST8 set for each 0.75 degrees.

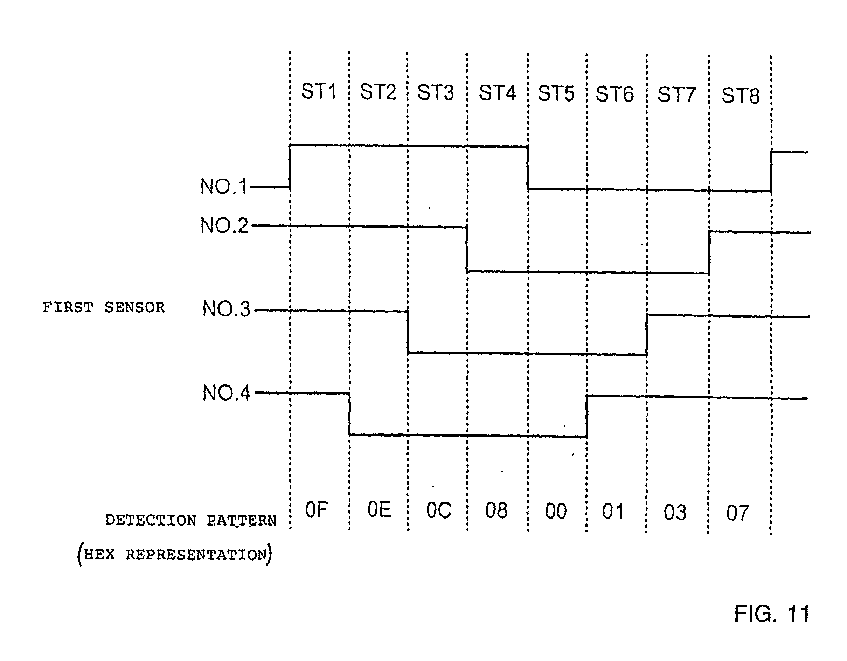

Here, the four first sensors 151 ... are numbered to NO. 1 to NO. 4 in the order of the arrangement thereof, and if it is assumed that each of the first sensors 151 outputs a signal of the high level when an N pole 143_{N} is detected, then the first sensors 151 ... of NO.1 to NO. 4 output such signals as illustrated in FIG. 11 for each stages ST1 to ST8. In other words, when the high level signal is represented by "1" and the low level signal is represented by "0", in the first stage ST1, the combination of the output signals of the first sensors 151 ... is "1111" in binary number (0F in hexadecimal number); in the second stage ST2, the combination of the output signals of the first sensors 151 ... is "1110" in binary number (0E in hexadecimal number); in the third stage ST3, the combination of the output signals of the first sensors 151 ... is "1100" in binary number (0C in hexadecimal number); in the fourth stage ST4, the combination of the output signals of the first sensors 151 ... is "1000" in binary number (08 in hexadecimal number); in the fifth stage ST5, the combination of the output signals of the first sensors 151 ... is "0000" in binary number (00 in hexadecimal number); in the sixth stage ST6, the combination of the output signals of the first sensors 151 ... is "0001" in binary number (01 in hexadecimal number); in the seventh stage ST7, the combination of the output signals of the first sensors 151 ... is "0011" in binary number ( 03 in hexadecimal number); and in the eighth stage ST8, the combination of the output signals of the first sensors 151 ... is "0111" in binary number (07 in hexadecimal number).

The four second sensors 152 ... are embedded in the base member 153 such that they have a same relative positional relationship to the N poles 147_{N} and S poles 147_{S} of the second magnetic ring 142 as the relative positions between the first sensors 151 ... and the N poles 143_{N} and S poles 143_{S} of the first magnetic ring 141, and each time the second magnetic ring 142 is angularly displaced from the first stage ST13 to the eighth stage ST8 with respect to the fixed second sensors 152 ..., the combination pattern of detection signals by the four second sensors 152 ... is different similarly to that by the four first sensors 151 ... .

Accordingly, if the maximum value of the rotational phase difference between the first and second rotary disks 40, 48 is within the range of the eighth stage ST8 (8 x 0.75 degrees = 6 degrees), then'the combination pattern of the detection signals of the first and second sensors 151 ..., 152 ... varies in accordance with the rotational phase difference which is produced as an input torque is applied to the crank pedals 37_{L}, 37_{R}, and the control unit 140 can discriminate the rotational phase difference between the two rotary disks 40, 48.

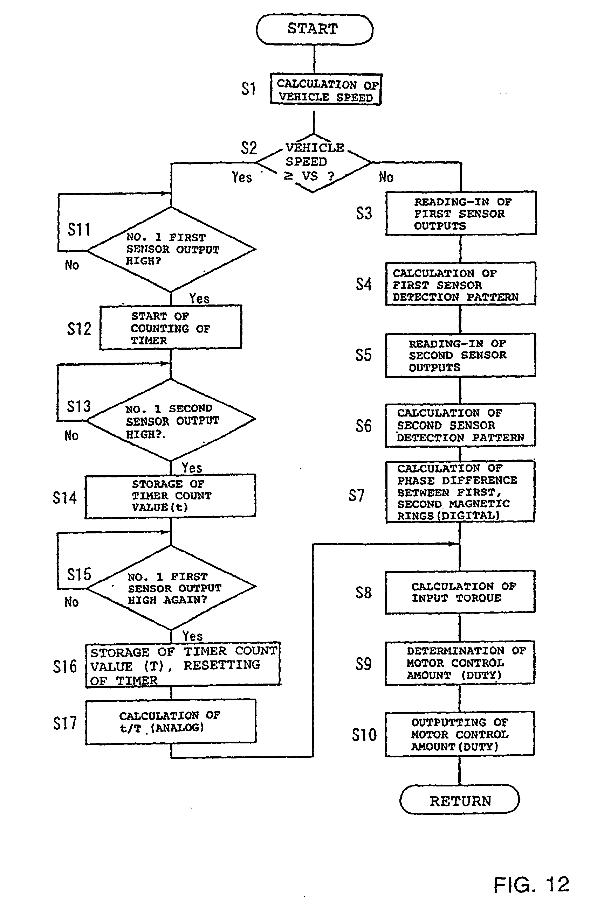

Such detection signals of the first sensors 151 ... and the second sensors 152 ... as described above are inputted to the control unit 140, and the control unit 140 controls operation of the electric motor 34 in accordance with a control procedure illustrated in FIG. 12 in response to the detection signals of the first and second sensors 151 ..., 152 ....

Referring to FIG . 12 , in step S1, the vehicle speed is calculated, and in step S2, it is discriminated whether or not the vehicle speed is equal to or higher than a preset vehicle speed VS. The discrimination vehicle speed VS is set to a value close to "0", for example, to 0.5 to 1 km/h in advance in order to discriminate whether or not, upon starting of treadling of the crank pedals 37_{L}, 37_{R}, the motor-assist bicycle is in a substantially stopping state prior to starting of travelling, and if it is discriminated that the vehicle speed is lower than the preset vehicle speed VS, that is, when it is discriminated that treadling of the crank pedals 37_{L}, 37_{R} has been started, the control advances to step S3.

In step S3, the outputs of the four first sensors 151 ... are read in, and in next step S4, a detection pattern of the four first sensors 151 ... is detected. Further, in step S5, the outputs of the four second sensors 152 ... are read in, and in next step S6, a detection pattern of the four second sensors 152 ... is calculated. Furthermore, in step S7, the phase difference between the first and second magnetic rings 141, 142, that is, the rotational phase difference between the first and second rotary disks 40, 48, is calculated based on the combination of the detection patterns of the first sensors 151 ... and the second sensors 152 ....

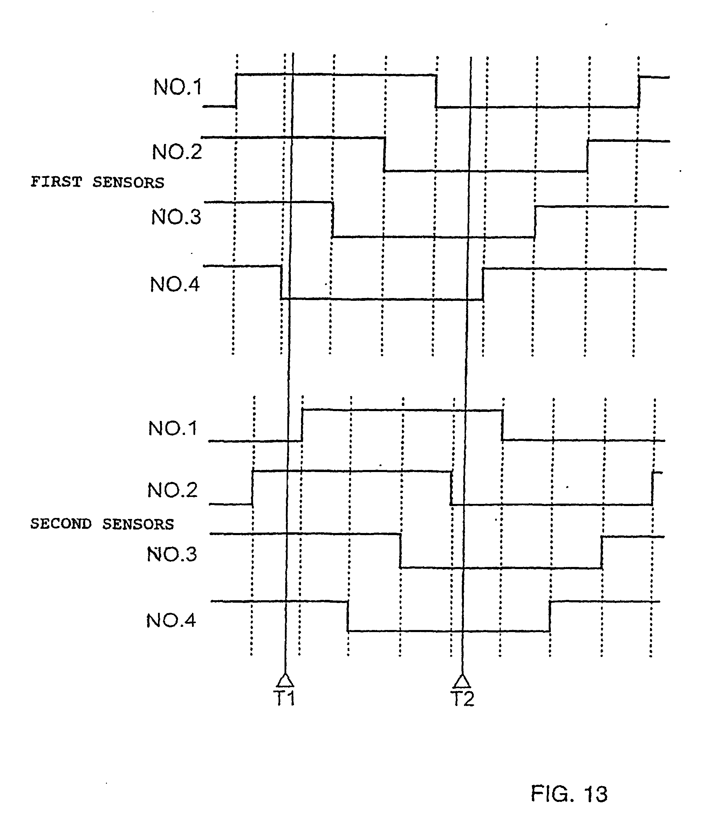

Here, if a case wherein, when a rotational phase difference between the two rotary disks 40, 48 is produced in accordance with a torque input, the output signals of the first sensors 151 ... of NO. 1 to NO. 4 and the output signals of the second sensors 152 ... of NO. 1 to NO. 4 are such as illustrated in FIG. 13 is presumed, then at the detection timing T1, the detection pattern of the f irst sensors 151 ... is "0E" (hexadecimal number) while the detection pattern of the second sensors 152 ... is "07" (hexadecimal number). Accordingly, while the detection pattern based on the first sensors 151 ... indicates the second stage ST2, the detection pattern based on the second sensors 152 ... indicates the eighth stage ST8, and the rotational phase difference between the two rotary disks 40, 48 is (2 - 8 = -6). Consequently, if complement processing is performed because of the fact that the stage number is "8", then the rotational phase difference is 2 stages (1.5 degrees). On the other hand, at the detection timing T2, while the detection pattern of the first sensors 151 ... is "00" (hexadecimal number), the detection pattern of the second sensors 152 ... is "08" (hexadecimal number). Accordingly, while the detection pattern based on the first sensors 151 ... indicates the fourth stage ST5, the detection pattern based on the second sensors 152 ... indicates the fourth stage ST4, and the rotational phase difference between the two rotary disks 40, 48 is (5 - 4 = 1) and the rotational phase difference is 1 stage (0.75 degrees).

In this manner, when a torque which is equal to 1/8 to 2/8 the detectable maximum torque is inputted, depending upon the detection timing, a rotational phase difference corresponding to 1 stage or 2 stages is obtained as a digital value in step S7 based on the combinations of the detection patterns of the first sensors 151 ... and the second sensors 152 ..., and in step S8, an input torque can be obtained by multiplying the rotational phase difference by a spring constant of the coil springs 57 provided between the first and second rotary disks 40, 48.

While, in step S9, a motor control amount corresponding to the input torque obtained in step S8 is determined, operation of the electric motor 34 is duty controlled, and in step S9, a duty control amount of the electric motor 34 is calculated. In step S10, the control amount is outputted.

The procedure of such steps S1 to S10 as described above is performed to effect detection of an input torque upon starting of treadling of the crank pedals 37_{L}, 37_{R} and operation control of the electric motor 34 based on the detected input torque, and when the motor-assist bicycle enters an ordinary travelling condition, the procedure of steps S8 to S10 is executed subsequently to the procedure of steps S11 to S17. In particular, if it is discriminated in step S2 that the vehicle speed is equal to or higher than the preset vehicle speed VS, then the control advances from step S2 to step S11, and in this step S11, it is discriminated whether or not the output of the first sensor 151 of NO. 1 of the four first sensors 151 has changed to the high level. If the output of the first sensor 151 has changed to the high level, then counting by a timer is started in step S12.

In step S13, it is discriminated whether the output of the second sensor 152 of NO. 1 of the four second sensors 152 ... has changed to the high level, and if the output of the second sensor 152 has changed to the high level, then the count time t of the timer is stored in step S14 when a change to the high level is detected. Further in step S15, it is discriminated whether or not the output of the first sensor 151 of NO. 1 of the four first sensors 151 ... has changed to the high level again, and when the output of the first sensor 151 changes to the high level, the count time T by the timer is stored and the timer is reset in step S16.

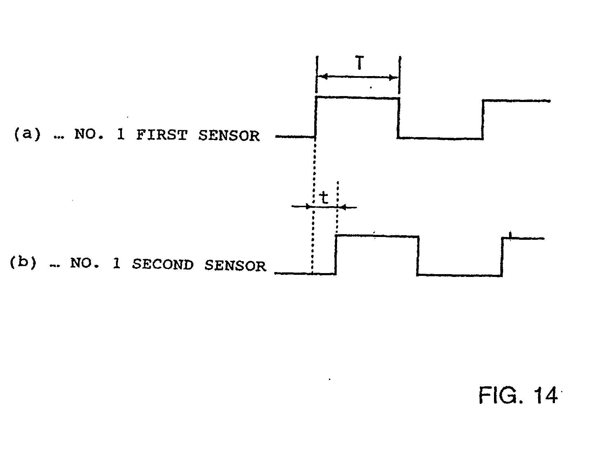

According to the procedure of such steps S11 to S16 as described above, when the output of the first sensor 151 of NO. 1 is such as illustrated in (a) of FIG. 14 and the output of the second sensor 152 of NO. 1 is such as illustrated in (b) of FIG. 14, the count value t represents a time difference between the outputs of the first and second sensors 151, 152, and the count value T represents a detection period of the first sensor 151 of NO. 1.

In step S17, t/T is calculated, and the phase difference between the first and second magnetic rings 141, 142, that is, the phase difference between the first and second rotary disks 40, 48, can be obtained as t/T, which is an analog value, in step S17, and thereafter, steps S8 to S10 are successively passed, thereby executing operation control of the electric motor 34 in an ordinary travelling condition of the motor-assist bicycle.

A protective cover 158 is fastened to the support ring 154 by a plurality of screw members 159 ..., and the first and second magnetic rings 141, 142 and the base member 153 in which the f irst and second sensors 151, 152 are embedded are covered with a protective cover 158 from the side opposite to the first and second rotary disks 40, 48. Besides, a labyrinth structure 160 is formed between a circumferential edge portion of the protective cover 158 which is in a fixed condition and the second housing 148 of the second magnetic ring 142 which rotates around the axis of the crankshaft 36. Accordingly, pollution to the first and second sensors 151 ..., 152 ... and the two magnetic rings 141, 142 by water, mud or the like is prevented to the utmost.

Subsequently, operation of the first working example is described above. If a driver treadles the crank pedals 37_{L}, 37_{R} in order to cause the motor-assist bicycle to run, then the treadling force of the crank pedals 37_{L}, 37_{R} is transmitted to the pedal sprocket wheel 61 through the first one-way clutch 41, first rotary disk 40, coil springs 57 ... and second rotary disk 48, and the power is further transmitted to the rear wheel W_{R} through the chain 64 and driven sprocket wheel 63.

A rotational phase difference is produced between the first rotary disk 40 and the second rotary disk 48 in accordance with the treadling force by the crank pedals 37_{L}, 37_{R} then while compressing the coil springs 57 ..., and the control unit 140 calculates an input torque in accordance with the detection signals of the plurality of first sensors 151 ... which detect the N poles 143_{N} and S poles 143_{S} of the first magnetic ring 141 which rotates together with the first rotary disk 40 and the detection signals of the plurality of second sensors 152 ... which detect the N poles 147_{N} and S poles 147_{S} of the second magnetic ring 142 which rotates together with the second rotary disk 48. Then, as the control unit 140 controls the electric motor 34 so that assisting power corresponding to the input torque may be exhibited by the electric motor 34, the rotational assisting power of the driving sprocket wheel 62 is controlled and the load to the driver can be reduced.

In the motor-assist bicycle having such a construction as described above, even in a condition wherein the rear wheel W_{R} is not rotating in an initial stage of operation of the crank pedals 37_{L}, 37_{R}, the first rotary disk 40 exhibits a rotational phase difference from the second rotary disk 48. Accordingly, since also the first magnetic ring 141 exhibits a rotational phase difference from the second magnetic ring 142, the combination pattern of the detection signals of the first sensors 151 ... and the second sensors 152 ... varies comparing with that prior to the operation of the crank pedals 37_{L}, 37_{R}, and in an initial stage of starting of inputting operation in a stopping condition of the vehicle, an input torque can be detected immediately to apply assisting power by the electric motor 34 to the rear wheel W_{R}.

Besides, while, in a condition wherein the rear wheel W_{R} is not rotating in an initial stage of operation of the crank pedals 37_{L}, 37_{R}, an input torque is calculated based on a rotational phase difference obtained as a digital value, after the motor-assist bicycle enters an ordinary travelling condition, an input torque can be calculated linearly based on a rotational phase difference obtained as an analog value, and assisting power corresponding linearly to the input torque can be obtained such that the assisting power corresponding to the linear input torque may be exhibited by the electric motor 34. Thus, in all regions from an initial stage of operation of the crank pedals 37_{L}, 37_{R} to an ordinary travelling condition, the input torque can be detected with certainty and the assisting power by the electric motor 34 can be applied to the rear wheel W_{R}.

Further, since the first rotary disk 40 is connected to the right-hand side crank pedal 37_{R} through the first one-way clutch 41 and the second rotary disk 48 between which and the first rotary disk 40 the coil springs 57 ... are provided is disposed for rotation around the same axis at a position adjacent the first rotary disk 40 while the first and second magnetic rings 141, 142 are arranged on one side of the first and second rotary disks 40, 48 in the axial direction, a space in which the first and second sensors 151, 152 are to be arranged is assured on one side of the first and second rotary disks 40, 48, and not only it becomes unnecessary to assure a surplus space in which both of the sensors 151 ..., 152 ... are to be arranged, but also the mounting operation can be facilitated by mounting the first and second magnetic rings 141, 142 and the first and second sensors 151 ..., 152 ... collectively on one side of the first and second rotary disks 40, 48.

Further, the first and second magnetic rings 141, 142 are resiliently engaged with the first and second rotary disks 40, 48, respectively, and maintenance and mounting operations of the first and second magnetic rings 141, 142 are easy.

Besides, since the first magnetic ring 141 has the plurality of N poles 143_{N} and S poles 143_{S} provided on the inner periphery of the ring-shaped first housing 144 while the second magnetic ring 142 has the plurality of N poles 147_{N} and S poles 147_{S} provided on the inner periphery of the ring-shaped second housing 148 and the first and second sensors 151, 152 are arranged on the inner sides of the first and second magnetic rings 141, 142 such that they are embedded in the common base member 153, both of the sensors 151 ..., 152 ... can be arranged inwardly of the cylindrical first and second magnetic rings 141, 142 to achieve further reduction in space, and further, both of the sensors 151 ..., 152 ... can be covered with the first and second housings 144, 148 to protect them.

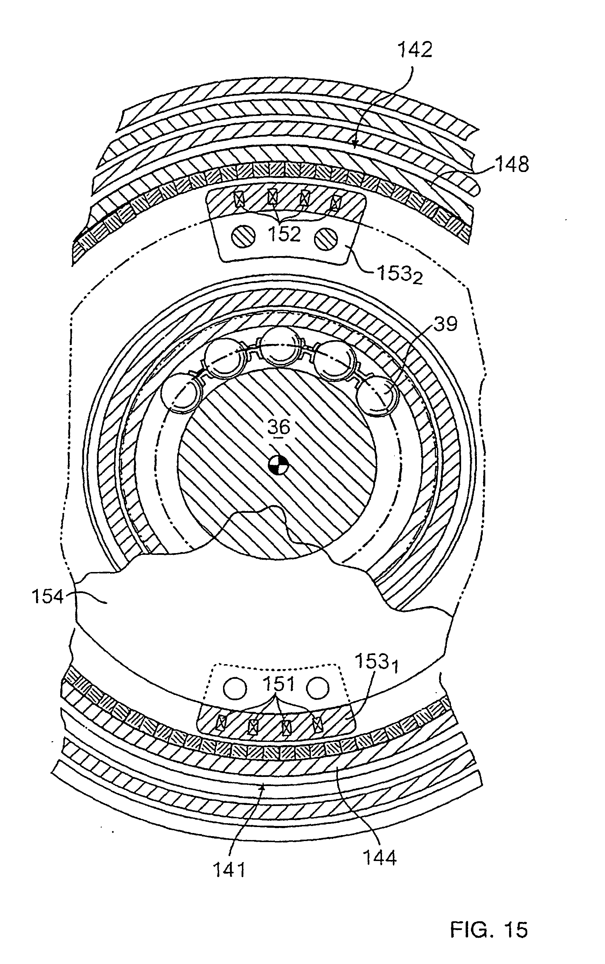

FIG. 15 shows a second working example of the present invention, and a base member 153₁ in which the plurality of first sensors 151 ... for detecting the N poles 143_{N} and S poles 143_{S} of the first magnetic ring 141 are built and another base member 153₂ in which the plurality of second sensors 152 ... for detecting the N poles 147_{N} and S poles 147_{S} of the second magnetic ring 142 are built may be arranged fixedly at positions spaced by 180 degrees in a circumferential direction of the crankshaft 36.

For example, the present invention can be applied not only to a motor-assist vehicle, but also to a motor-assist wheelchair.

The invention makes it possible, in a motor-assist vehicle wherein assisting power corresponding to an input torque can be applied from an electric motor to a driving wheel, to detect the input torque in order to apply assisting power rapidly to the driving wheel upon starting of an operation input from a stopping condition of the vehicle.

## Claims

1. An input torque detection apparatus for a motor-assist vehicle which vehicle includes an input operation member (37_{L}, 37_{R}) manually operated for driving a rear wheel (W_{R}) to rotate, and an electric motor (34) capable of providing assisting power corresponding to an input torque provided to said input operation member (37_{L}, 37_{R}) to said driving wheel (W_{R}), wherein the input torque detection apparatus comprises a first rotary member (40) adapted to rotate in synchronism with the rotation of said input operation member (37_{L}, 37_{R}), a second rotary member (48) adapted to rotate in synchronism with the rotation of said driving wheel (W_{R}) white allowing a phase difference in the direction of rotation from said first rotary member (40) to be produced, **characterized in that** the input torque detection apparatus comprises a first magnetic ring (141) which has a plurality of N poles and S poles (143_{N}, 143_{S}) arranged in a ring-like configuration and having different polarities adjacent each other in a circumferential direction and rotates together with said first rotary member (40), a second magnetic ring (142) which has a plurality of N poles and S poles ( 147_{N}, 147_{S}) arranged in a ring-like configuration with an equal angle to that of said N poles and S poles (143_{N}, 143_{S}) of said first magnetic ring (141) and rotates together with said second rotary member (48), a plurality of first sensors (151) arranged at fixed positions in an opposing relationship to said first magnetic ring (141) for detecting said N poles and S poles (143_{N}, 143_{S}) of said first magnetic ring (141), a plurality of second sensors (152) arranged at fixed positions in an opposing relationship to said second magnetic ring (142) for detecting said N poles and S poles (147_{N}, 147_{S}) of said second magnetic ring (142), and a control unit (140) for discriminating a rotational phase difference between said first and second rotary members (40, 48) based on a combination pattern of detection signals of said first and second sensors (151, 152) and recognizing the rotational phase difference as an information representing said input torque to be applied to said input operation member (37_{L}, 37_{R}) to control operation of said electric motor (34).

2. An input torque detection apparatus for a motor-assist vehicle according to claim 1, **characterized in that** said first rotary member (40) is connectable to said input operation member (37_{L}, 37_{R}) through a one-way clutch (41) which interrupts torque transmission from said first rotary member (40) side to said input operation member (37_{L}, 37_{R}) side, and said second rotary member (48) between which and said first rotary member (40) a coil spring 57 is interposed is arranged at a position adjacent said first rotary member (40) in such a manner as to allow rotation thereof around a same axis as that of said first rotary member (40) while said first and second magnetic rings (141, 142) juxtaposed in the axial direction of said first and second rotary members (40, 48) are arranged on one side in the axial direction of said first and second rotary members (40, 48).

3. An input torque detection apparatus for a motor-assist vehicle according to claim 2, **characterized in that** said first and second magnetic rings (141, 142) are resiliently engaged with said first and second rotary members (40, 48), respectively.

4. An input torque detection apparatus for a motor-assist vehicle according to claim 2 or 3, **characterized in that** said first and second magnetic rings (141, 142) have a plurality of N poles and S poles (143_{N}, 143_{S}, 147_{N}, 147_{S}) provided on inner peripheries of ring-shaped first and second housings (144, 148), respectively, and said first and second sensors (151, 152) are arranged on the inner sides of both of said magnetic rings (141, 142), respectively.

5. An input torque detection apparatus for a motor-assist vehicle according to claim 2, **characterized in that** said first and second magnetic rings (141, 142) and first and second sensors (151, 152) are covered with a protective cover (158) from the opposite side to said first and second rotary members (40, 48).

## Patentansprüche

1. Eingangsdrehmomenterfassungsvorrichtung für ein motorunterstütztes Fahrzeug, welches Fahrzeug ein Eingangsbetätigungselement (37_{L}, 37_{R}) enthält, das zum drehenden Antrieb eines Hinterrads (W_{R}) manuell betätigt wird, sowie einen Elektromotor (34), der in der Lage ist, entsprechend einem an dem Eingangsbetätigungselement (37_{L}, 37_{R}) vorgesehenen Eingangsdrehmoment eine Hilfskraft an dem Antriebsrad (W_{R}) vorzusehen, worin die Eingangsdrehmomenterfassungsvorrichtung ein erstes Rotorelement (14) aufweist, das dazu ausgelegt ist, sich synchron mit der Drehung des Eingangsbetätigungselements (37_{L}, 37_{R}) zu drehen, ein zweites Rotorelement (48), das dazu ausgelegt ist, sich synchron mit der Drehung des Antriebsrads (W_{R}) zu drehen, während die Erzeugung einer Phasendifferenz in der Drehrichtung von dem ersten Rotorelement (40) erlaubt wird,
**dadurch gekennzeichnet, dass** die Eingangsdrehmomenterfassungsvorrichtung umfasst:
einen ersten magnetischen Ring (141), der eine Mehrzahl von N-Polen und S-Polen (143_{N}, 143_{S}) aufweist, die in einer ringartigen Konfiguration angeordnet sind und in einer Umfangsrichtung einander benachbart unterschiedliche Polaritäten aufweisen, und der sich zusammen mit dem ersten Rotorelement (40) dreht, einen zweiten magnetischen Ring (142), der eine Mehrzahl von N-Polen und S-Polen (147_{N}, 147_{S}) aufweist, die in einer ringartigen Konfiguration mit dem gleichen Winkel zu jenen der N-Pole und S-Pole (143_{N}, 143_{S}) des ersten magnetischen Rings (141) angeordnet sind, und der sich zusammen mit dem zweiten Rotorelement (148) dreht, eine Mehrzahl von ersten Sensoren (151), die an festen Positionen in gegenüberliegender Beziehung zu dem ersten magnetischen Ring (141) angeordnet sind, um die N-Pole und S-Pole (143_{N}, 143_{S}) des ersten magnetischen Rings (141 ) zu erfassen, eine Mehrzahl von zweiten Sensoren (152), die an festen Positionen in gegenüberliegender Beziehung zu dem zweiten magnetischen Ring (142) angeordnet sind, um die N-Pole und S-Pole (147_{N}, 147_{S}) des zweiten magnetischen Rings (142) zu erfassen, und eine Steuereinheit (140) zum Unterscheiden einer Drehphasendifferenz zwischen dem ersten und dem zweiten Rotorelement (40, 48) auf der Basis eines Kombinationsmusters von Erfassungssignalen der ersten und zweiten Sensoren (151, 152) und zum Erkennen der Drehphasendifferenz als Information, welche das Eingangsdrehmoment repräsentiert, das auf das Eingangsbetätigungselement (37_{L}, 37_{R}) auszuüben ist, um den Betrieb des Elektromotors (34) zu steuern/zu regeln.

2. Eingangsdrehmomenterfassungsvorrichtung für ein motorunterstütztes Fahrzeug nach Anspruch 1, **dadurch gekennzeichnet, dass** das erste Rotorelement (40) mit dem Eingangsbetätigungselement (37_{L}, 37_{R}) durch eine Einwegkupplung (41) verbindbar ist, welche die Drehmomentübertragung von der Seite des ersten Rotorelements (40) zu der Seite des Eingangsbetätigungselements (37_{L}, 37_{R}) unterbricht, und das zweite Rotorelement (48), zwischen welchem und dem ersten Rotorelement (40) eine Schraubenfeder (57) angeordnet ist, in einer Position benachbart dem ersten Rotorelement (40) in einer solchen Weise angeordnet ist, um eine Drehung desselben um die gleiche Achse wie jener des ersten Rotorelements (40) zu erlauben, während der erste und der zweite magnetische Ring (141, 142), die in der axialen Richtung der ersten und zweiten Rotorelemente (40, 48) nebeneinander liegen, an einer Seite in der axialen Richtung des ersten und des zweiten Rotorelements (40, 48) angeordnet sind.

3. Eingangsdrehmomenterfassungsvorrichtung für ein motorunterstütztes Fahrzeug nach Anspruch 2, **dadurch gekennzeichnet, dass** der erste und der zweite magnetische Ring (141, 142) jeweils mit dem ersten und dem zweiten Rotorelement (40, 48) elastisch in Eingriff steht.

4. Eingangsdrehmomenterfassungsvorrichtung für ein motorunterstütztes Fahrzeug nach Anspruch 2 oder 3, **dadurch gekennzeichnet, dass** der erste und der zweite magnetische Ring (141, 142) eine Mehrzahl von N-Polen und S-Polen (143_{N}, 143_{S}, 147_{N}, 147_{S}) aufweisen, die an Innenumfängen eines jeweiligen ringförmigen ersten und zweiten Gehäuses (144, 148) vorgesehen sind, und die ersten und zweiten Sensoren (151, 152) an den jeweiligen Innenseiten der beiden magnetischen Ringe (141,142) angeordnet sind.

5. Eingangsdrehmomenterfassungsvorrichtung für ein motorunterstütztes Fahrzeug nach Anspruch 2, **dadurch gekennzeichnet, dass** der erste und der zweite magnetische Ring (141, 142) und die ersten und zweiten Sensoren (151, 152) von der dem ersten und dem zweiten Rotorelement (40, 48) entgegengesetzten Seite her mit einem Schutzdeckel (158) abgedeckt sind.

## Revendications

1. Dispositif de détection de couple d'entrée pour un véhicule aidé par moteur, lequel véhicule comporte un élément d'actionnement d'entrée (37_{L}, 37_{R}) actionné manuellement pour entraîner une roue arrière (W_{R}) en rotation, et un moteur électrique (34) pouvant fournir une puissance d'aide correspondant à un couple d'entrée fourni audit élément d'actionnement d'entrée (37_{L}, 37_{R}) pour entraîner ladite roue (W_{R}), le dispositif de détection de couple d'entrée comportant un premier élément rotatif (40) adapté pour tourner en synchronisme avec la rotation dudit élément d'actionnement d'entrée (37_{L}, 37_{R}), un second élément rotatif (48) adapté pour tourner en synchronisme avec la rotation de ladite roue d'entraînement (W_{R}), tout en permettant la production d'une différence de phase dans la direction de rotation à partir dudit premier élément rotatif (40), **caractérisé en ce que** le dispositif de détection de couple d'entrée comporte un premier anneau magnétique (141) qui a une pluralité de pôles N et de pôles S (143_{N}, 143_{S}) agencés selon une configuration analogue à un anneau et ayant différentes polarités, adjacents les uns aux autres dans une direction circonférentielle, et qui tournent ensemble avec ledit premier élément rotatif (40), un second anneau magnétique (142) qui a une pluralité de pôles N et de pôles S (147_{N}, 147_{S}) agencés selon une configuration analogue à un anneau, ayant un angle égal à celui desdits pôles N et pôles S (143_{N}, 143_{S}) dudit premier anneau magnétique (141), et qui tournent ensemble avec ledit second élément rotatif (48), une pluralité de premiers détecteurs (151) agencés dans des positions fixes dans une relation en opposition par rapport audit premier anneau magnétique (141), pour détecter lesdits pôles N et pôles S (143_{N}, 143_{S}) dudit premier anneau magnétique (141), une pluralité de seconds détecteurs (152) agencés dans des positions fixes dans une relation en opposition par rapport audit second anneau magnétique (142), pour détecter lesdits pôles N et pôles S (147_{N}, 147_{S}) dudit second anneau magnétique (142), et une unité de commande (140) pour discriminer une différence de phase de rotation entre lesdits premier et second éléments rotatifs (40, 48) sur la base d'un motif de combinaison de signaux de détection desdits premier et second détecteurs (151, 152), et pour reconnaître la différence de phase de rotation en tant qu'information représentant ledit couple d'entrée devant être appliqué audit élément d'actionnement d'entrée (37_{L}, 37_{R}) pour commander un actionnement dudit moteur électrique (34).

2. Dispositif de détection de couple d'entrée pour un véhicule aidé par moteur selon la revendication 1, **caractérisé en ce que** ledit premier élément rotatif (40) peut être connecté audit élément d'actionnement d'entrée (37_{L}, 37_{R}) à travers un embrayage unidirectionnel (41) qui interrompt une transmission de couple à partir du côté dudit premier élément rotatif (40) vers le côté dudit élément d'actionnement d'entrée (37_{L}, 37_{R}), et ledit second élément rotatif (48), un ressort hélicoïdal (57) étant interposé entre celui-ci et ledit premier élément de rotation (40), est agencé dans une position adjacente audit premier élément rotatif (40), de manière à permettre une rotation de celui-ci autour d'un même axe que celui dudit premier élément rotatif (40), tandis que lesdits premier et second anneaux magnétiques (141, 142) juxtaposés dans la direction axiale desdits premier et second éléments rotatifs (40, 48) sont agencés sur un premier côté dans la direction axiale desdits premier et second éléments rotatifs (40, 48).

3. Dispositif de détection de couple d'entrée pour un véhicule aidé par moteur selon la revendication 2, **caractérisé en ce que** lesdits premier et second anneaux magnétiques (141, 142) sont respectivement mis en prise de manière élastique avec lesdits premier et second éléments rotatifs (40, 48).

4. Dispositif de détection de couple d'entrée pour un véhicule aidé par moteur selon la revendication 2 ou 3, **caractérisé en ce que** lesdits premier et second anneaux magnétiques (141, 142) ont une pluralité de pôles N et de pôles S (143_{N}, 143_{S}, 147_{N}, 147_{S}) agencés respectivement sur des périphéries intérieures de premier et second boîtiers en forme d'anneau (144, 148), et lesdits premier et second détecteurs (151, 152) sont agencés respectivement sur les côtés intérieurs desdits deux anneaux magnétiques (141, 142).

5. Dispositif de détection de couple d'entrée pour un véhicule aidé par moteur selon la revendication 2, **caractérisé en ce que** lesdits premier et second anneaux magnétiques (141, 142) et lesdits premier et second détecteurs (151, 152) sont recouverts à l'aide d'un couvercle de protection (158) à partir du côté opposé auxdits premier et second éléments rotatifs (40, 48).
